# DEMANDE DE BREVET EUROPEEN

(11) **EP 2 202 388 A1**
(43) Date de publication de la demande: **30.06.2010**
(21) Numéro de dépôt: 08172699.4
(22) Date de dépôt: 23.12.2008
(51) Int. Cl.: F01D 25/24

(54) **Architecture de brides**

(71) Demandeur: Techspace Aero S.A., 4041 Milmort (BE)
(72) Inventeur: Lebrun, Rodolphe, 5000 Namur (BE); Lhoest, André, 4500 Huy (BE)
(74) Mandataire: pronovem

(57) **Abrégé**

La présente invention se rapporte à un stator de turbomachine comportant un assemblage de brides de viroles extérieures par chevauchement; lesdites brides étant assemblées au moyen de boulons aveugles.

## Description

### Objet de l'invention

La présente invention se rapporte à un compresseur axial de turbomachines. Elle se rapporte plus particulièrement à un système d'assemblage de viroles d'un carter de compresseur axial.

### Etat de la technique

Les compresseurs basse ou haute pression des turboréacteurs comportent plusieurs étages d'aubes rotoriques qui sont séparés par des étages redresseurs qui ont pour but de repositionner le vecteur vitesse du fluide sortant de l'étage précédent avant de l'envoyer vers l'étage suivant.

Ces étages redresseurs sont constitués essentiellement d'aubes statoriques reliant une virole extérieure à une virole intérieure, toutes deux concentriques et délimitant la veine aérodynamique.

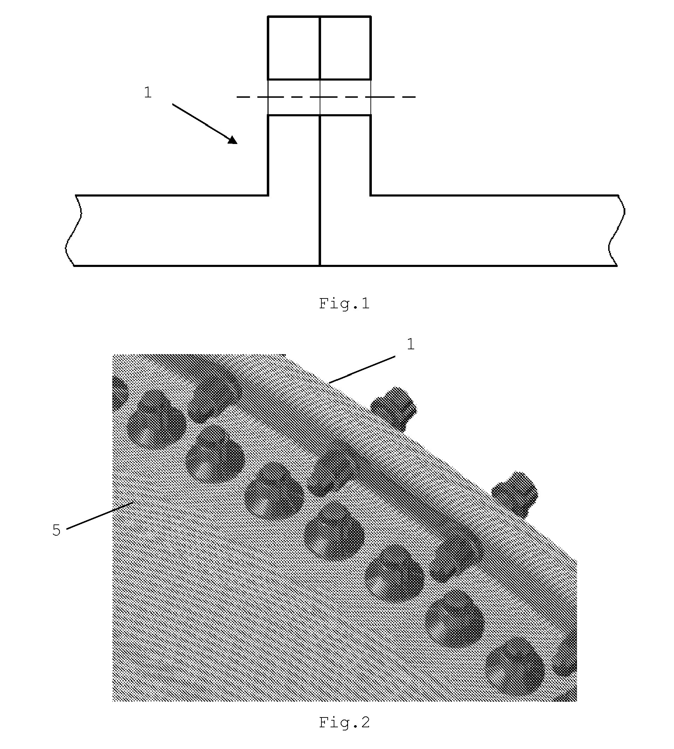

Les viroles extérieures sont actuellement assemblées par des brides dites en «L» maintenues par des boulons traversant des orifices agencés dans les brides (voir figures 1 et 2).

Ces brides en «L» ont pour inconvénient d'augmenter l'encombrement radial de la virole extérieure, ainsi que sa masse.

De même, les boulons augmentent l'encombrement axial et peuvent interférer avec les systèmes de fixation des aubes à la virole comme montré à la figure 2.

La demande EP 1 939 409 A1 présente un système de raccordement de deux viroles visant à minimiser l'encombrement radial. Ce système de raccordement comporte deux brides annulaires avec une cavité où vient se loger un verrou de jonction de forme complémentaire, le verrou présentant des saillies munies de moyens de fixation. Le système de raccordement comporte également au-moins un collier agencé de manière à prendre appui sur les deux brides et présentant des moyens de fixation complémentaires aux moyens de fixation des saillies du verrou. Dans cette demande, les moyens de fixation, le verrou et le collier sont disposés circonférentiellement permettant ainsi une réduction de l'encombrement radial.

### Buts de l'invention

La présente invention vise à fournir une solution qui permette de s'affranchir des inconvénients de l'état de la technique.

La présente invention vise plus particulièrement à fournir un compresseur axial de turbomachine comportant un assemblage de viroles extérieures minimisant l'encombrement radial et axial et permettant une réduction de la masse de la virole et, plus globalement, du moteur.

La présente invention vise également à fournir un compresseur axial de turbomachine comprenant un assemblage présentant une sécurité contre la perte des éléments de fixation dans la veine aérodynamique.

### Résumé de l'invention

La présente invention divulgue un stator de turbomachine comportant un assemblage de brides de viroles extérieures par chevauchement, lesdites brides étant assemblées au moyen de boulons aveugles.

Selon des modes particuliers de l'invention, le stator de turbomachine comporte au moins une ou une combinaison appropriée des caractéristiques suivantes :
- des aubes statoriques reliant une virole intérieure à la virole extérieure dudit stator comportent une plate-forme rétentrice s'étendant en-dessous de la zone d'assemblage des brides.
- la plate-forme rétentrice comporte un évidement en-dessous de la zone d'assemblage des brides.
- la plate-forme rétentrice est boulonnée ou collée à la virole extérieure.
- la tête du boulon aveugle affleure à la surface supérieure de la bride se trouvant en position chevauchante.

### Brève description des figures

La figure 1 représente une coupe schématique et partielle d'un assemblage de viroles extérieures par des brides en «L» selon l'état de la technique.

La figure 2 illustre avec une vue tridimensionnelle le risque d'interférence entre les boulons d'attaches des viroles et la tige filetée du système de fixation des aubes à la virole selon l'état de la technique.

La figure 3 représente une coupe axiale d'une partie d'un turbocompresseur selon l'état de la technique.

La figure 4 présente une coupe axiale d'un assemblage, selon l'invention, de viroles extérieures avec des brides se chevauchant, encore appelées brides en «éclisse».

La figure 5 présente une vue tridimensionnelle de ce même assemblage.

La figure 6 présente les différents stades de placement d'un boulon aveugle.

### Légende :

- (1): Bride d'assemblage en «L»
- (2): Aube statorique
- (3): Aube rotorique
- (4): Virole intérieure
- (5): Virole extérieure
- (6): Abradable
- (7): Brides d'assemblage en «éclisse»
- (8): Boulon aveugle
- (9): Tête du boulon aveugle
- (10): Plate-forme d'aube rétentrice
- (11): Evidement de la plate-forme d'aube rétentrice
- (12): Tige filetée
- (13): Pistolet

### Description détaillée de l'invention

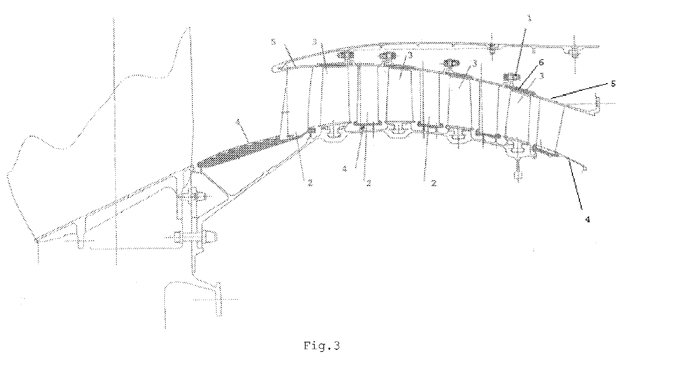

Selon l'état de technique, les brides d'assemblage des viroles de compresseur sont en forme de «L». A la figure 3 montrant une coupe partielle d'un turbocompresseur, on peut voir ces brides d'assemblage en «L» 1 entre viroles extérieures 5. Les aubes statoriques 2 et rotoriques 3 ainsi que les viroles intérieures 4 sont également référencées.

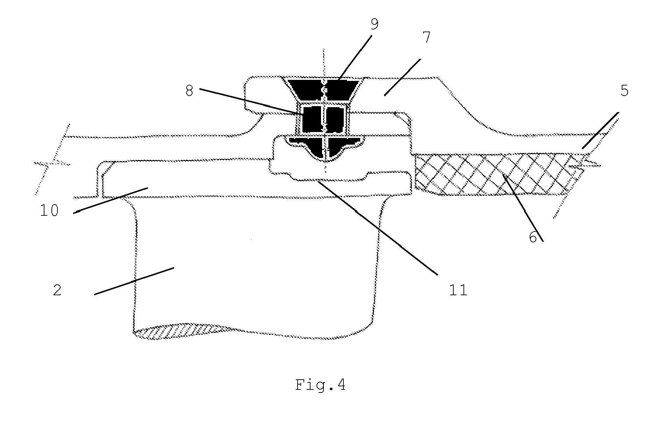

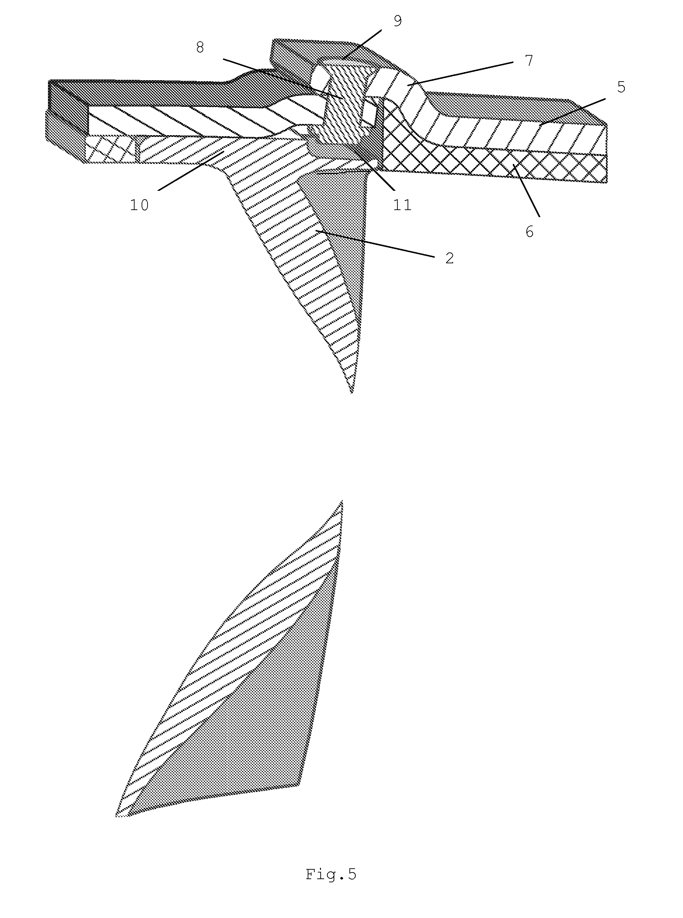

La présente invention décrit un turboréacteur avec un système novateur d'assemblage de viroles extérieures tel que montré aux figures 4 et 5.

Chaque virole extérieure 5 comporte à ses deux extrémités une bride 7 en «éclisse» permettant un assemblage avec la bride de la virole précédente par chevauchement.

Les brides 7 de deux viroles adjacentes 5 sont assemblées au moyen d'un boulon aveugle 8. Ce type de fixation permet un assemblage aisé des deux viroles et ne demande aucun accès par l'intérieur des viroles. De plus, aucun écrou n'est requis pour ce type de fixation, ce qui réduit la masse de l'assemblage. A titre informatif, les étapes de montage d'un boulon aveugle seront détaillées plus loin.

La tête du boulon aveugle 9 affleure à la surface de la bride chevauchante; ceci afin de réduire l'encombrement radial de l'assemblage.

Afin d'éviter tout chute du boulon aveugle dans la veine aérodynamique en cas de défaillance du système de fixation, une plate-forme d'aube dite rétentrice 10 est boulonnée ou collée à la virole extérieure 5 et s'étend en-dessous de la zone d'assemblage des brides. Le boulon aveugle ne peut donc pas s'échapper de son logement en cas de défaillance.

Optionnellement, la plate-forme présente en outre un évidement 11 en-dessous de la zone d'assemblage des brides des viroles. Cet évidement permet un montage plus aisé du boulon aveugle, évitant tout contact de ce dernier avec la plate-forme lors du montage.

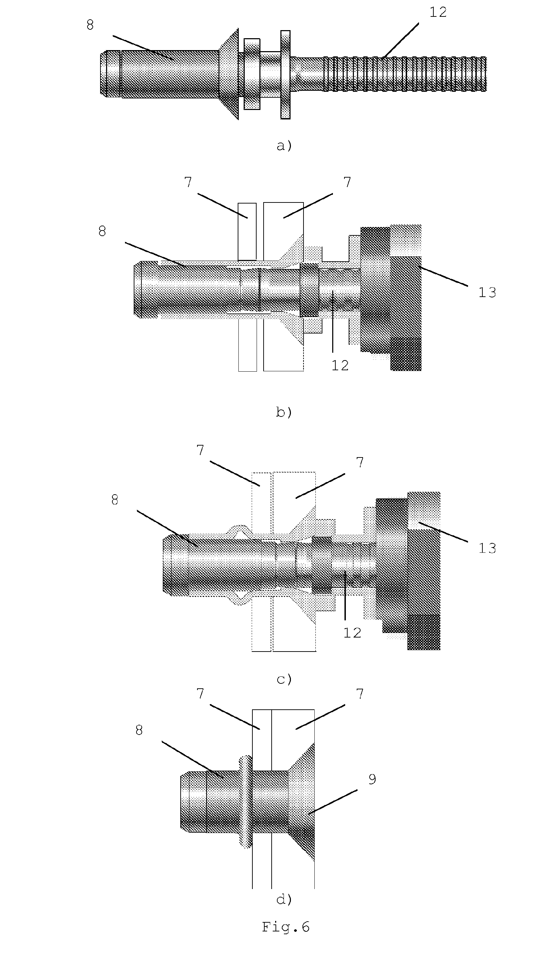

La figure 6 montre les étapes de montage d'un boulon aveugle. Dans cet exemple, les brides 7 à assembler sont schématisées par deux plaques. En a), on voit le boulon aveugle 8 avec la tige filetée 12 tel que livré par le fournisseur. En b), le boulon aveugle 8 avec la tige filetée 12 est positionné avec un pistolet 13 dans le trou prévu à cet égard dans les brides. En c), la tige filetée 12 est tirée et le boulon 8 se déforme permettant ainsi l'assemblage des deux brides 7. Dans le dernier stade d), les deux brides 7 sont parfaitement assemblées et la tige filetée est rompue.

### Avantages de l'assemblage selon l'invention.

La suppression des brides en «L» permet une diminution de l'encombrement radial des viroles et par là même une réduction de la masse de la virole ce qui va également engendrer un gain de masse sur tout le moteur. En effet, l'encombrement radial d'un assemblage par brides en «L» est d'environ 25 mm alors que celui d'un assemblage selon l'invention est d'environ 20 mm. Un gain de l'ordre de 5 mm en encombrement radial dans un compresseur basse pression se reporte sur le diamètre global du moteur et de la nacelle et implique donc un gain de masse important sur tout le moteur. De plus, l'absence d'écrou dans la fixation avec boulon aveugle permet également de réduire la masse de l'assemblage.

Ce nouvel assemblage permet en outre de réduire l'encombrement axial par rapport à un assemblage classique comprenant des boulons disposés axialement.

L'utilisation de brides se chevauchant permet de faire travailler les viroles principalement en cisaillement au niveau des fixations. Ce mode de sollicitation est particulièrement avantageux lorsqu'on envisage des viroles en matériaux composites.

Aucune partie du boulon aveugle n'est susceptible de tomber dans la veine aérodynamique grâce à l'utilisation d'une plate-forme d'aube rétentrice.

## Revendications

1. Stator de turbomachine comportant un assemblage de brides (7) de viroles extérieures (5) par chevauchement, lesdites brides (7) étant assemblées au moyen de boulons aveugles (8).

2. Stator de turbomachine selon la revendication 1, **caractérisé en ce que** des aubes statoriques (2) reliant une virole intérieure (4) à la virole extérieure (5) dudit stator comportent une plate-forme rétentrice (10) s'étendant en-dessous de la zone d'assemblage des brides (7).

3. Stator de turbomachine selon la revendication 2 **caractérisé en ce que** la plate-forme rétentrice (10) comporte un évidement (11) en-dessous de la zone d'assemblage des brides (7).

4. Stator de turbomachine selon l'une quelconque des revendications précédentes **caractérisé en ce que** la plate-forme rétentrice (10) est boulonnée ou collée à la virole extérieure (5).

5. Stator de turbomachine selon l'une quelconque des revendications précédentes, **caractérisé en ce que** la tête du boulon aveugle (9) affleure à la surface supérieure de la bride (7) se trouvant en position chevauchante.
